# EUROPEAN PATENT APPLICATION

(11) **EP 2 476 531 A1**
(43) Date of publication of application: **18.07.2012**
(21) Application number: 12151226.3
(22) Date of filing: 16.01.2012
(51) Int. Cl.: B28D 7/00, B23D 59/00, B23Q 15/12

(54) **Method for adjusting the sawing speed of a concrete element saw, and a saw for cutting concrete elements**

(30) Priority: 18.01.2011 FI 20115048
(71) Applicant: Elematic Oy Ab, 37801 Toijala (FI)
(72) Inventor: Lähteenmäki, Arto, FI-37600 Valkeakoski (FI)
(74) Representative: Kiviluoma, Markku Juhani

(57) **Abstract**

A method for adjusting the sawing speed of a concrete element saw (1), in which method the saw blade (5) is set to rotate substantially at a constant speed, so that during the sawing process, the torque of at least one feed motor (8, 10) of a saw blade (5) and/or the torque of the drive motor (11) moving the concrete element saw (1) is measured, and the feed rate of the saw blade is adjusted on the basis of said measurement of the torque. The invention also relates to a concrete element saw applying said method.

## Description

The invention relates to the sawing of prefabricated concrete elements. More precisely, the invention relates to a method for adjusting the sawing speed of a concrete element saw, and to a concrete element saw applying said method.

Prefabricated concrete elements, such as hollow-core slabs and solid concrete slabs, are conventionally cast by slipform casting on long casting beds as a continuous casting process. The length of said continuous casting process is defined either on the basis of the total length of the elements to be cast, or on the basis of the maximum length of the casting bed. The length of casting beds used in slipform casting can be even 150-200 m, depending on the size of the element plant. When a slipform casting equipment has cast a continuous slab on a casting bed, the cast concrete mass is allowed to be cured on the casting bed. After the concrete mass has cured, the uniform cast element is sawed into pieces with predetermined lengths on the basis of the targets of usage of the ready-made elements, and the sawed concrete elements are lifted off the casting bed to storage, to wait for transportation to their appointed targets of usage.

Generally concrete elements cast by slipform casting are prestressed, i.e. they are provided with reinforcing wires. Moreover, after slipform casting, the cast concrete elements can be provided with different apertures or cavities, for example for lead-ins or other required post-casting build-up of the elements. Apart from regular concrete mass, the casting material of slipform cast concrete elements can be for example fiber reinforced concrete mass.

For sawing cured concrete elements, there is usually employed a saw, or sawing equipment, with a diamond blade, because in hardness, cured concrete mass corresponds to rock material, and often it is also provided with reinforcing steel wires.

The sawing of a fresh, green element is also possible, but in that case the element to be sawed cannot contain reinforcing wires, because in a fresh element, the reinforcing wires would be detached from the cast element owing to their remarkable prestress, and this would lead to destructive results for the element. Apart from sawing cured concrete elements to predetermined lengths, a concrete element saw is used, among others, for splitting concrete elements in the lengthwise direction, and, when necessary, for sawing elements into predetermined lengths and for shaping element ends in order to saw them in a slanted fashion, i.e. at an angle with respect to the vertical plane.

With regular concrete element saws, when sawing a concrete element, the rotational speed of the saw, and the saw input, i.e. the proceeding speed of the sawing process, are set as constant, so that the torque of the saw blade rotation motor is sufficient for sawing even the thickest points, whereafter the sawing is started. As an alternative, the sawing input is adjusted manually, so that the proceeding rate of the sawing process is slowed down at the points with the hardest strain.

A problem with this kind of conventionally applied adjustment of the sawing speed with a concrete element saw is the rapidly changing load of the saw, which is due to for example cavities, reinforcing strands, aggregate etc. possibly included in the product to be sawed. This means that the adjusting of the sawing speed easily becomes back and forth oscillating, i.e. amplitude-like and jerky. Said oscillation and jerkiness affect, among others, as a slowing factor the speed of the sawing process, as well as result in an uneven wearing of the saw blade, which for example cuts the working life of the saw blade.

In the arrangement according to the present invention, the rotary speed of the saw blade in a concrete element saw is set as constant, and the saw blade input is adjusted by measuring the torque of the motor generating the saw blade input, i.e. the procession of the saw blade, and said torque of the motor is aimed to be maintained constant.

In an arrangement according to the invention, when starting a sawing process of a cast concrete product, the saw blade is first rotated at the selected constant speed of rotation, whereafter the saw blade is started to be moved, i.e. fed, by intermediation of a feed motor, at the selected feed rate that is defined as constant. When the saw blade starts to cut the concrete product, the torque of the saw blade affecting the feed motor begins to increase. In case the measured value of the torque of the saw blade affecting the feed motor during the sawing process remains below the defined constant torque, the feed rate of the saw blade is increased. In case the measured value of the torque of the saw blade affecting the feed motor during sawing process surpasses the defined constant torque, the feed rate of the saw blade is reduced.

In a preferred embodiment according to the invention, the speed of the motion of the saw blade, i.e. the speed of the feed motion of the saw blade, generated by the feed motor and set as constant, is the maximum speed of the feed motion. Now the speed of the saw blade input is only slowed down, as the torque caused in the feed motor by the saw blade surpasses the threshold value set for the torque.

By means of an arrangement according to the invention, the sawing equipment and the sawing process can be controlled without the jerkiness and ensuing problems that are typical of the sawing equipment of the prior art.

Apart from cutting a concrete element in the transversal direction, the sawing speed adjustment method according to the invention can also be used for splitting an element in the lengthwise direction, and for cutting an element on a slanted plane. For splitting and cutting an element on a slanted plane, the adjustment of sawing speed utilizes, in addition to the torque affecting the saw blade feed motors, also a torque affecting the motor, such as a drive motor, that moves the whole concrete element saw during the sawing process.

In an arrangement according to the invention, the saw blade feed motor is advantageously an electric motor, in which case the adjustment of the motor rotation speed can be easily realized by a frequency converter. Now the torque affecting the feed motor is advantageously defined on the basis of the effective output of the feed motor, obtained from the frequency converter.

In an arrangement according to the invention, the torque affecting the saw blade feed motor can also be given two or more threshold values, and said torque threshold values can be changed in the different stages of the sawing process. By means of this kind of change in the torque threshold value in the middle of the sawing process, it is possible to facilitate for example a slowing down of the sawing speed as the saw blade arrives at a boundary surface of the concrete element to be sawed, so that a possible tearing of the concrete element surface can be prevented.

Moreover, in an arrangement according to the invention, the adjustment of the sawing speed is advantageously carried out by an automatic control system, which performs the sawing speed adjustment on the basis of the measurement result of the torque affecting the feed motor, as well as of a predetermined constant torque.

More precisely, the method according to the invention is characterized by what is set forth in the characterizing part of claim 1, and the concrete element saw according to the invention is characterized by what is set forth in the characterizing part of claim 6.

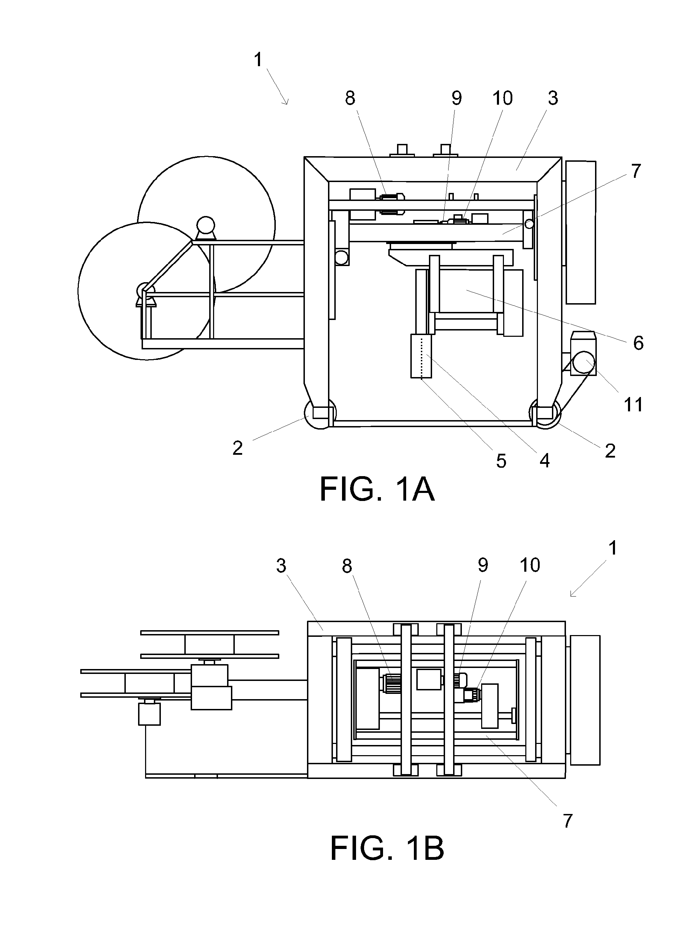

The invention is described in more detail below, by way of example, with reference to the appended drawings, where
Figure 1A is a schematical side-view illustration of a known concrete element saw, utilizing a sawing speed adjustment method according to the invention, and
Figure 1B is a schematical top-view illustration of the concrete element saw illustrated in Figure 1A.

The concrete element saw 1 illustrated in the drawings includes a frame 3 provided with wheels 2, a saw blade 5 provided with a protective cover 4, a saw blade rotation motor 6, a saw blade guide carriage 7, a motor 8 for adjusting the height of the guide carriage, a motor 9 for turning the saw with respect to the vertical axis, and a saw blade feed motor 10.

When the concrete element saw 1 is being used, it is first hoisted on a casting bed, on which a cast and cured concrete element to be sawed is located. On the casting bed, the wheels 2 of the concrete element saw 1 are set on the rails provided on the bed, which rails are used for instance by slipform casting machines during the element casting process.

After being hoisted on the casting bed, the concrete element saw 1 is moved to the element cutting point, where the element sawing process is started. In the beginning of the sawing process, there is first started the rotation of the saw blade 5 by intermediation of the saw blade rotation motor 6, as well as the feeding of the cutting fluid used in the sawing process. Thereafter the rotary saw blade 5 is driven downwards in the vertical direction, to the element surface on the area of the element side edge, by intermediation of the feed motor 8, so that the saw blade begins to penetrate into the element in order to cut it. The saw blade 5 is driven vertically downwards, until the lower edge of the saw blade has substantially reached the top surface of the casting bed. Next the rotary saw blade is started to be moved in the lateral direction by intermediation of a feed motor 10, and said lateral feeding of the saw blade is continued, until the concrete slab is cut.

When cutting thick concrete elements, the sawing can be carried out in several lateral sawing steps. Moreover, when necessary, the sawing can be started for example in the center of an element, so that one half of the element is sawed first, whereafter the saw returns to the starting point of the sawing process, to the middle of the element, or alternatively to the opposite outer edge of the element, and saws the other side of the element.

When the concrete element saw 1 has sawn the slab in two, it is moved, or it moves by its own right, to the next cutting point of the element by means of a drive motor 11 that rotates the wheels 2, and the sawing process is repeated. Finally, when a single element is sawn to size, or when all elements located on the same casting bed are sawn, the sawn-to-size elements are lifted away from the casting bed.

In the adjustment process according to the invention of the sawing speed of a concrete element, there is measured the torque created for the motors generating the saw feed motion, i.e. for the feed motor 8 generating the vertical feed motion of the saw blade 5, and for the feed motor 10 generating the horizontal feed motion of the saw blade, and on the basis of said measurement, the speed of the feed motion is adjusted. Thus the torque caused by the feed motion for the feed motors 8 and 10 is aimed to be kept constant by adjusting the speed of the feed motion, i.e. the proceeding speed of the sawing process.

The speed of the sawing process is adjusted so that a predetermined constant torque is set for the feed motors 8 and 10, and the proceeding speed of the feed motors is adjusted with respect to said constant torque. In case the measured value of the torque of the saw blade, affecting the feed motor, remains below the defined constant torque, the feed rate of the saw blade, generated by said feed motor, is increased. In case the measured value of the torque of the saw blade, affecting the feed motor, surpasses the defined constant torque, the feed rate of the saw blade, generated by said feed motor, is reduced.

The torque caused for the feed motors 8 and 10 during the sawing process is defined on the basis of the load directed to the motors, and in the case of electric motors, said torque is defined from the effective output of the motors.

As an alternative, the adjusting of sawing speed according to the invention can be restricted to the vertical feed motion only, i.e. to controlling the feed motor 8, or to the horizontal feed motion only, i.e. to controlling the feed motor 10.

The adjusting of sawing speed according to the invention can also be used in situations where a slipform cast concrete element is split in the lengthwise direction of the element. In that case the saw blade 5 is turned, by a turning motor 9, to be aligned in the direction of the slab to be split and of the concrete element saw 1, i.e. on the plane of Figure 1A, and the rotary saw blade is fed downwards by the feed motor 8 generating the vertical motion of the saw blade, so that the saw blade begins to saw the element after reaching the upper surface of the element. When the saw blade 5 has penetrated the element thickness in the vertical direction owing to the effect of the vertical feed motion generated by the feed motor 8, and has substantially reached the upper surface of the casting bed, the concrete element saw 1 is started to be moved along the casting bed by intermediation of the saw drive motor 11, which drive motor rotates the wheels 2 of the concrete element saw. During this sawing process in the lengthwise direction of the element, the sawing speed is adjusted on the basis of the torques affecting the feed motor 8 (vertical sawing direction) and the drive motor 11 (horizontal sawing direction).

Moreover, the adjusting of the sawing speed according to the invention can also be applied in cases where the concrete element to be sawn is cut in a slanted plane, i.e. in a direction that deviates from the lengthwise direction of the element to be cut, and from the transversal direction that is perpendicular to said lengthwise direction. In that case the saw blade 5 is turned to said chosen slanted plane by intermediation of the turning motor 9, the vertical sawing motion is generated by intermediation of the feed motor 8, and the sawing motion proceeding on the slanted plane is created by intermediation of the simultaneous motion generated by both the feed motor 10 and the drive motor 11. During this sawing process in the slanted direction, the sawing speed is adjusted on the basis of the total value of the torques affecting the feed motor 8 (vertical sawing direction) and both the feed motor 10 and the drive motor 11 (sawing direction in slanted plane).

When adjusting the sawing speed according to the invention, the employed feed motors are advantageously electric motors, in which case the adjusting of the rotation speed of the feed motors is easily realized by frequency converters.

In addition, the adjusting of sawing speed according to the invention can be easily connected to an automatic control system of a concrete element saw, so that the automatic control system observes the torque stress of the feed motors and adjusts the rotation speed of the feed motors on the basis of the obtained torque stress values. This kind of automatic control system provides for a complete automatization of the whole sawing process of cast and cured concrete elements.

## Claims

1. A method for adjusting the sawing speed of a concrete element saw (1), in which method the saw blade (5) is set to rotate substantially at a constant speed, **characterized in that** during the sawing process, the torque of at least one feed motor (8, 10) of the saw blade (5) and/or the torque of the drive motor (11) moving the concrete element saw (1) is measured, and the saw blade feed rate is adjusted on the basis of said torque measurement.

2. A method according to claim 1, **characterized in that** the feed rate of the saw blade (5) is adjusted on the basis of at least one constant value set for the torque of the saw blade feed motor (8, 10) and/or for the torque of the drive motor (11) moving the concrete element saw (1).

3. A method according to claim 2, **characterized in that** the feed rate of the saw blade (5) is increased when the measured value of the torque of the saw blade feed motor (8, 10) and/or of the torque of the drive motor (11) remains below said constant value.

4. A method according to claim 2 or 3, **characterized in that** the feed rate of the saw blade (5) is reduced when the measured value of the torque of the saw blade feed motor (8, 10) and/or of the torque of the drive motor (11) surpasses said constant value.

5. A method according to any of the claims 2-4, **characterized in that** the adjusting of the feed rate of the saw blade (5) is realized by an automatic control system of the concrete element saw (1) on the basis of the measured result of the torque affecting the feed motor (8, 10) and/or the drive motor (11) moving the concrete element saw (1), as well as on the basis of the constant value set for the torque of the feed motor.

6. A concrete element saw (1), said saw including a saw blade (5), means (6) for rotating the saw blade at an substantially constant speed, at least one saw blade feed motor (8, 10) and a drive motor (11) moving the concrete element saw, **characterized in that** the saw (1) is provided with means for measuring the torque of the feed motor (8, 10) of the saw blade (5) and/or for measuring the torque of the drive motor (11), as well as means for adjusting the feed motor (8, 10) and/or the drive motor (11) on the basis of said measurement of the torque in order to adjust the sawing speed of the concrete element saw (1).

7. A saw (1) according to claim 6, **characterized in that** the feed motor (8, 10) of the saw blade (5) and/or the drive motor (11) is an electric motor, and that the means for adjusting the speed of the feed motor and/or the drive motor include a frequency converter.

8. A saw (1) according to claim 6 or 7, **characterized in that** the concrete element saw (1) is provided with an automatic control system for adjusting the feed rate of the saw blade (5).
